# EUROPEAN PATENT SPECIFICATION

(11) **EP 1 586 922 B1**
(45) Date of publication and mention of the grant of the patent: **19.11.2008**
(21) Application number: 05252078.0
(22) Date of filing: 01.04.2005
(51) Int. Cl.: G02B 6/44

(54) **Bend restrictor**
Knickschutz
Limiteur de courbure

(30) Priority: 13.04.2004 GB 0408186
(43) Date of publication of application: 19.10.2005
(73) Proprietor: Trelleborg CRP Ltd, Stanley Skelmersdale Lancashire WN8 8EA (GB)
(72) Inventor: Walsh, Philip Michael, Lower Darwen Lancashire BB3 ORB (GB); Smith, Andrew Michael, Preston Lancashire PR4 6UX (GB)
(74) Representative: W.P. Thompson & Co.

(56) References cited:
- EP-A- 0 197 546
- DE-A1- 10 219 532
- DE-C1- 19 910 128
- US-A- 4 892 442
- US-B1- 6 408 888

## Description

The present invention relates to bend restrictors for use with flexible elongate members.

A bend restrictor serves to receive some form of flexible elongate member, for example a cable, pipe, umbilical, marine riser etc., and to prevent it from adopting an excessively small radius of curvature. There are numerous applications for such devices. For example GB 2269274 describes a situation in which sub-sea cabling for telecommunications is deployed by passing it over a sheave. The cabling is subject to tension upon deployment and a segmented bend restrictor surrounding the cabling serves to prevent it from being excessively tightly bent in the process. The bend restrictor in question comprises a number of "housing members" each having a through-going bore to receive the cabling and being joined to identically formed neighboring housing members through universal joints of ball and socket type. Abutment of end faces of neighboring housing members limits the angular displacement of one relative to another, and in this way the overall minimum radii of curvature of the bend restrictor and the cabling within it are likewise limited.

It is necessary in some applications to provide for dissipation of heat from the elongate member, e.g. where it is formed by power cabling subject to ohmic heating. This can be problematic where the bend restrictor is formed by a material which is a poor heat conductor. Moulded plastics bend restrictors in particular would be subject to this problem.

Forming the bend restrictor with sufficient stiffness for its purpose can also be problematic.

European patent application 0197546 (application no. 86104793.4, applicant Tsubakimoto Chain Co) describes a flexible supporting sheath for cables and the like formed by an interconnected series of links each having a convex spherical surface at one end, and a concave spherical surface at its opposite end. The concave and convex surfaces mate with one another to form the sheath. Waterproofing seals are provided, which may be formed as O-rings, and may take the form of projecting ribs, between the concave and convex mating surfaces.

In accordance with the present invention, there is a bend restrictor comprising a plurality of housings coupled to one another through universal joints which permit relative angular movement of one housing relative to its neighbour, the universal joints each comprising a male head received in a female socket, the housings collectively defining a continuous channel for receiving an elongate member and the angular deflection of one housing relative to its neighbour being limited, thereby limiting the minimum radius of curvature to which the elongate member can be subject within the channel, characterised in that the male heads and/or the female sockets are defined by projecting ribs and the structure allows for circulation of the surrounding fluid within the bend restrictor.

In the bend restrictor according to the invention the ribs can contribute to dissipation of heat. This is because, due to their surface area, they assist in exchange of heat with the bend restrictor's surroundings.

In accordance with a second aspect of the present invention, there is a housing part for a bend restrictor, the housing part being semi-circular in transverse section and being shaped to enable it to be assembled with a similarly formed, laterally adjacent housing part to form a housing of circular transverse section having a male head, a female socket and a through-going channel, such that a plurality of such housings can be coupled together to form a bend restrictor, longitudinally adjacent housings being coupled by a universal joint formed by the receipt of the head of one in the socket of another in a manner which permits limited relative angular displacement, and the channels of adjacent housings communicating to form a continuous channel for receiving an elongate member, characterised in that the housing part comprises projecting ribs which define in the assembled housing at least one of the male head and the female socket and the structure allows for circulation of surrounding fluid within the bend restrictor.

Specific embodiments of the present invention will now be described, by way of example only, with reference to the accompanying drawings in which:-
Figure 1 is a perspective illustration of two housings forming part of a bend restrictor according to a first embodiment of the present invention;
Figure 2 is similar to Figure 1 except that respective semi-tubular components forming half of each housing are omitted; and
Figure 3 is a perspective illustration of two housings forming part of a bend restrictor according to a second embodiment of the present invention.

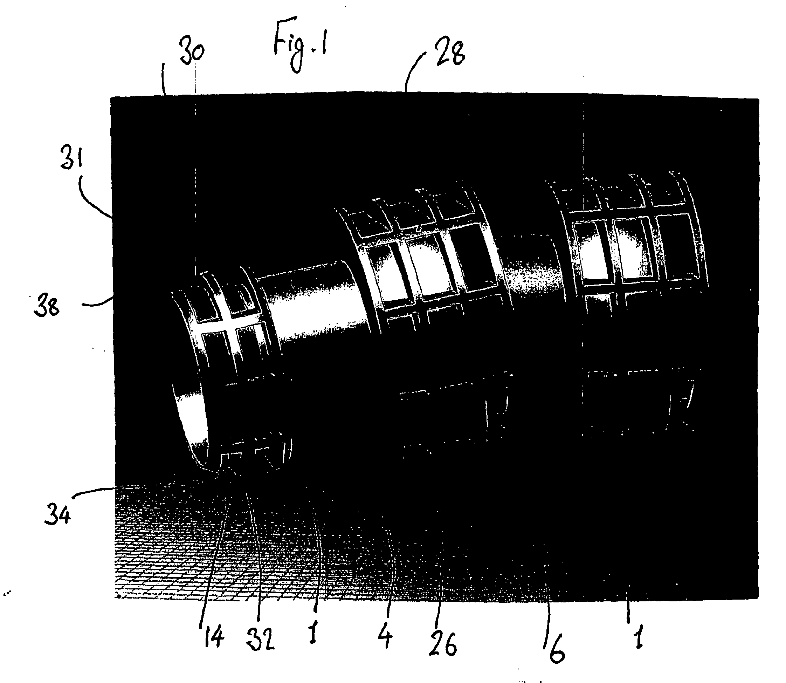

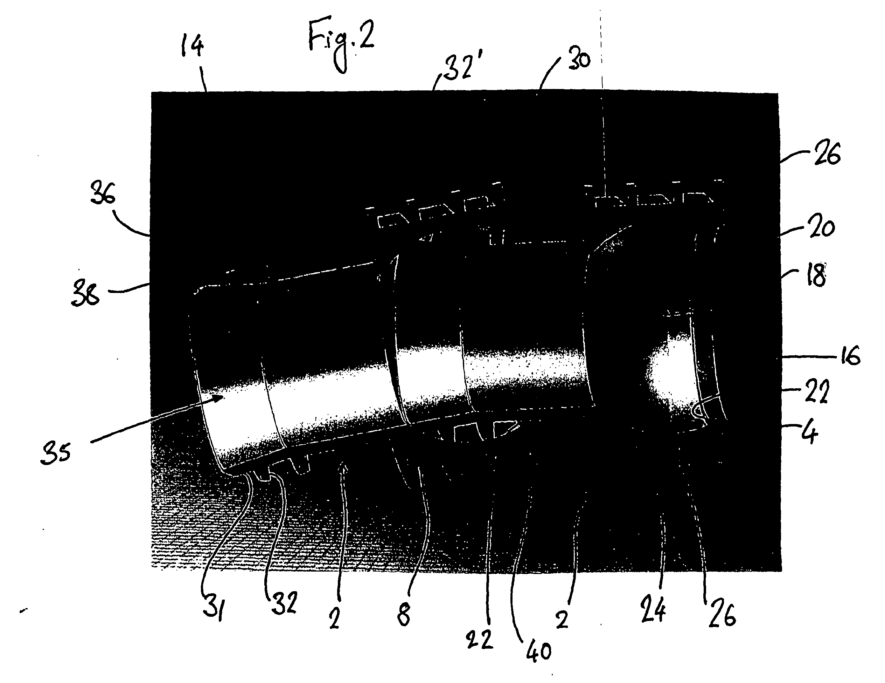

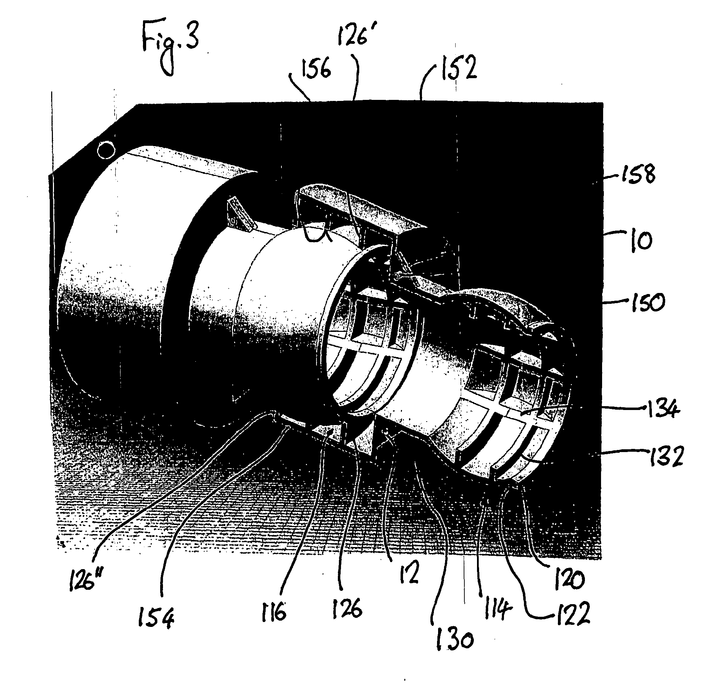

The illustrated bend restrictors are of moderately light duty construction and are intended for use with cabling whose diameter is up to roughly 125mm. The present invention could nonetheless be applied to larger bend restrictors. The illustrated restrictors are formed from plastics mouldings, and more specifically by injection moulding. Nylon is a suitable material and may incorporate fibre reinforcement, e.g of glass fibres. In the illustrated example all of the components making up the housings are identical to one another. Each housing 1 is circular in transverse section but is formed from two semi-circular housing parts 2. In Figure 1 the planes along which adjacent housing parts join are seen at 4 and 6. In Figure 2 planar faces 8 of the housing parts, which serve to abut corresponding faces of laterally adjacent parts, are exposed. Some registration feature is desirable to align the laterally adjacent housing parts 2 with each other. These features are omitted from Figures 1 and 2, but Figure 3 shows a suitable formation comprising a pip 10 which locates in a hole 12 of the adjacent part.

Longitudinally neighboring housings 1 are coupled together by a universal joint comprising a male head 14 received in a female socket 16 in the manner of a "ball and socket" joint. Each housing has a head 14 at one of its ends and a socket 16 at the other end. In the present embodiment the socket 16 has a part-spherical, continuous inner surface 18. At its longitudinal extremity the socket terminates in an open mouth surrounded by a circular collar 20 having a radially inwardly projecting shoulder 22. The socket 16 is defined by a wall 24 from whose outer surface project ribs or vanes 26, 28. These ribs project radially outwardly. Circumferential ribs 26 each form a complete ring around the socket 16 and are joined to each other by longitudinal ribs 28.

The wall 24 leads, at its end remote from the collar 20, to a cylindrical neck 30 which in its turn leads to the head 14. In the present embodiment the head is formed upon a frustro-conical end section 31 of the neck 30 which again carries a square matrix of outwardly projecting ribs comprising circumferential ribs 32 and longitudinal ribs 34. Outer edges 36 of the ribs and also a chamfered lip 38 at the frustro-conical end region 31 lie upon a notional sphere and in this way, despite not having a continuous spherical surface, the head 14 is adapted to serve in the manner of a ball in a ball and socket type joint, as Figure 2 makes clear.

Each housing 1 is hollow and it will be apparent from the drawings that together the housings form a continuous, through-going passage or channel 35 for receiving a flexible elongate member such as an electric cable. To assemble the bend restrictor laterally adjacent housing parts 2 are assembled with their socket 16 around the head 14 of a longitudinally adjacent housing. The laterally adjacent parts are secured to one another by a band passed around the neck 30 and joined to itself under tension. Suitable banding technology is well known in the art.

Relative angular displacement of longitudinally adjacent housing parts is limited by abutment of an inclined inner surface of the collar 20 against the neck 30, as seen at 40 in Figure 2. Any tendency for the head 14 to be drawn out of the socket 16 as a result is resisted by abutment of circumferential rib 32' against the shoulder 22.

The embodiment illustrated in Figure 3 differs from that of Figures 1 and 2 inter alia in the fact that its ribs or vanes project radially inwardly rather than outwardly. Correspondingly its head 114 has a continuous, part-spherical outer surface 150 which is received in socket 116 formed by ribs 126.

Looking at this construction in more detail, the part-spherical head 114 can be seen to terminate in an open mouth defined by a collar 120 forming a radially projecting, circumferential shoulder 122. The head 114 is hollow but is internally reinforced by radially inwardly projecting circumferential ribs 132 and longitudinal ribs 134.

The head 114 leads to a cylindrical hollow neck 130 which in turn leads via a shoulder 152 to an enlarged diameter cylindrical wall 154 within which the socket is formed by a matrix of circumferential and longitudinal, radially inwardly projecting ribs 126. Inner edges 156 at the ribs 126 lie upon part-spherical locus and so define the socket.

Angular movement of one housing relative to another is halted when rib 126' comes into abutment with shoulder 122, which happens concurrently with the inner edge of rib 126" coming into abutment with the neck 130.

The aforementioned pip 10 and hole 12 are formed in a web 158 at the junction of the neck 130 with the shoulder 152.

## Claims

1. A bend restrictor comprising a plurality of housings (1) coupled to one another through universal joints which permit relative angular movement of one housing (1) relative to its neighbour, the universal joints each comprising a male head (14,114) received in a female socket (16,116), the housings collectively defining a continuous channel (35) for receiving an elongate member and the angular deflection of one housing relative to its neighbour being limited, thereby limiting the minimum radius of curvature to which the elongate member can be subject within the channel (3 5), **characterised in that** the male heads (14,114) and/or the female sockets (16,116) are defined by projecting ribs (32,126) and the structure allows for circulation of the surrounding fluid within the bend restrictor.

2. A bend restrictor as claimed in claim 1 wherein a housing (1) comprises at least two parts (2) separable along a longitudinal plane.

3. A bend restrictor as claimed in claim 1 or claim 2 wherein a housing (1) comprises at least two parts(2) of semi-or part-circular section.

4. A bend restrictor as claimed in any preceding claim wherein the housings (1) each comprise at least two parts (2) and all of the housing parts are the same.

5. A bend restrictor as claimed in any preceding claim wherein the socket is defined by radially inwardly projecting ribs (126) forming a part-spherical locus.

6. A bend restrictor as claimed in any preceding claim wherein the head (14) is defined by radially outwardly projecting ribs (32) forming a part-spherical locus.

7. A bend restrictor as claimed in any preceding claims wherein the head (14) and the socket (116) are both provided with projecting ribs (32,126).

8. A bend restrictor as claimed in any preceding claim wherein a circumferential lip (32', 126') on one of the head (14) and the socket (116) is able to abut against a circumferential shoulder (22,122) on the other of the head (114) and the socket (116) to limit relative angular deflection of coupled housings (1).

9. A housing part (2) for a bend restrictor, the housing part (2) being semi-circular in transverse section and being shaped to enable it to be assembled with a similarly formed, laterally adjacent housing part (2) to form a housing (1) of circular transverse section having a male head (14,114), a female socket (16,116) and a through-going channel (35), such that a plurality of such housings (1) can be coupled together to form a bend restrictor, longitudinally adjacent housings (1) being coupled by a universal joint formed by the receipt of the head (14,114) of one in the socket (16,116) of another in a manner which permits limited relative angular displacement, and the channels (35) of adjacent housings (1) communicating to form a continuous channel (35) for receiving an elongate member, **characterised in that** the housing part (2) comprises projecting ribs (32,126) which define in the assembled housing at least one of the male head (14,114) and the female socket (16,116) and the structure allows for circulation of the surrounding fluid within the bend restrictor.

10. A housing part as claimed in claim 9 wherein the socket (116) is defined by radially inwardly projecting ribs (126) forming a part-spherical locus.

11. A housing part (2) as claimed in claim 9 or claim 10 wherein the head (14) is defined by radially outwardly projecting ribs (32) forming a part-spherical locus.

12. A housing part (2) as claimed in any of claims 9 to 11 comprising a circumferential lip (32', 126') on one of the head (14) and the socket (116) for abutting against a circumferential shoulder (22,122) on the other of the head and the socket to limit relative angular deflection of coupled housings.

## Patentansprüche

1. Biegungsbegrenzung mit einer Mehrzahl von Gehäusen (1), die aneinander durch Universalgelenke gekoppelt sind, welche relative Winkelbewegung eines Gehäuses (1) in Bezug zu seinem Nachbarn zulassen, wobei die Universalgelenke jeweils einen in einer Einsteckbuchse (16, 116) aufgenommenen Steckerkopf (14,114) aufweisen, die Gehäuse gemeinsam einen kontinuierlichen Kanal (35) zum Aufnehmen eines Langelements begrenzen und die Winkelablenkung eines Gehäuses in Bezug zu seinem Nachbarn begrenzt ist, wodurch der minimale Krümmungsradius begrenzt wird, dem das Langelement innerhalb des Kanals (35) ausgesetzt werden kann, **dadurch gekennzeichnet, dass** die Steckerköpfe (14, 114) und/oder die Einsteckbuchsen (16, 116) durch vorstehende Rippen (32,126) definiert werden und die Struktur die Zirkulation des umgebenden Fluids innerhalb der Biegungsbegrenzung zulässt.

2. Biegungsbegrenzung nach Anspruch 1, bei der ein Gehäuse (1) mindestens zwei Teile (2) aufweist, die entlang einer Längsebene getrennt werden können.

3. Biegungsbegrenzung nach Anspruch 1 oder Anspruch 2, bei der ein Gehäuse (1) mindestens zwei Teile (2) mit Halb- oder Teilkreisschnitt aufweist.

4. Biegungsbegrenzung nach einem vorhergehenden Anspruch, bei der die Gehäuse (1) jeweils mindestens zwei Teile (2) aufweisen und alle der Gehäuseteile die gleichen sind.

5. Biegungsbegrenzung nach einem vorhergehenden Anspruch, bei der die Buchse durch radial nach innen vorstehende Rippen (126) definiert wird, die einen teilkugelförmigen Ort bilden.

6. Biegungsbegrenzung nach einem vorhergehenden Anspruch, bei der der Kopf (14) durch radial nach außen vorstehende Rippen (32) definiert wird, die einen teilkugelförmigen Ort bilden.

7. Biegungsbegrenzung nach einem der vorhergehenden Ansprüche, bei der sowohl der Kopf (14) als auch die Buchse (116) mit vorstehenden Rippen (32,126) versehen ist.

8. Biegungsbegrenzung nach einem vorhergehenden Anspruch, bei der eine Umfangslippe (32', 126') entweder an dem Kopf (14) oder an der Buchse (116) an einer Umfangsschulter (22, 122) an dem/der anderen des Kopfes (114) und der Buchse (116) anliegen kann, um relative Winkelablenkung gekoppelter Gehäuse (1) zu begrenzen.

9. Gehäuseteil (2) für eine Biegungsbegrenzung, wobei der Gehäuseteil (2) einen halbkreisförmigen Querschnitt hat und geformt ist, um Zusammenbau desselben mit einem ähnlich geformten, seitlich benachbarten Gehäuseteil (2) zum Bilden eines Gehäuses (1) mit kreisförmigem Querschnitt zu ermöglichen, das einen Steckerkopf (14, 114), eine Einsteckbuchse (16, 116) und einen Durchgangskanal (35) aufweist, so dass eine Mehrzahl solcher Gehäuse (1) aneinander zum Bilden einer Biegungsbegrenzung gekoppelt werden kann, wobei in Längsrichtung benachbarte Gehäuse (1) durch ein Universalgelenk gekoppelt werden, das durch die Aufnahme des Kopfes (14,114) des einen in der Buchse (16, 116) eines anderen in einer Weise gebildet wird, die begrenzte relative Winkelverschiebung zulässt, und wobei die Kanäle (35) benachbarter Gehäuse (1) zum Bilden eines kontinuierlichen Kanals (35) zum Aufnehmen eines Langelements kommunizieren, **dadurch gekennzeichnet, dass** der Gehäuseteil (2) vorstehende Rippen (32, 126) aufweist, die in dem zusammengebauten Gehäuse mindestens einen des Steckerkopfes (14, 114) und der Einsteckbuchse (16, 116) definieren, und die Struktur Zirkulation des umgebenen Fluids innerhalb der Biegungsbegrenzung zulässt.

10. Gehäuseteil nach Anspruch 9, bei dem die Buchse (116) durch radial nach innen vorstehende Rippen (126) definiert wird, die einen teilkugelförmigen Ort bilden.

11. Gehäuseteil (2) nach Anspruch 9 oder Anspruch 10, bei dem der Kopf (14) durch radial nach außen vorstehende Rippen (32) definiert wird, die einen teilkugeiförmigen Ort bilden.

12. Gehäuseteil (2) nach einem der Ansprüche 9 bis 11, der eine Umfangslippe (32', 126') entweder an dem Kopf (14) oder der Buchse (116) zum Anliegen an einer Umfangsschulter (22, 122) an dem/der anderen des Kopfes und der Buchse aufweist, um die relative Winkelablenkung gekoppelter Gehäuse zu begrenzen.

## Revendications

1. Limiteur de courbure comportant une pluralité de logements (1) accouplés les uns aux autres par le biais de joints universels qui permettent un mouvement angulaire relatif d'un logement (1) par rapport à son voisin, les joints universels comportant chacun une tête mâle (14,114) reçue dans une douille femelle (16, 116), les logements définissant collectivement une gorge continue (35) permettant de recevoir un organe allongé et la déviation angulaire d'un logement par rapport à son voisin étant limitée, pour limiter de ce fait le rayon minimum de courbure auquel l'organe allongé peut être soumis à l'intérieur de la gorge (35), **caractérisé en ce que** les têtes mâles (14, 114) et / ou les douilles femelles (16,116) sont définies par des nervures en saillie (32,126) et **en ce que** la structure permet la circulation du fluide environnant à l'intérieur du limiteur de courbure.

2. Limiteur de courbure selon la revendication 1, dans lequel un logement (1) comporte au moins deux parties (2) séparables le long d'un plan longitudinal.

3. Limiteur de courbure selon la revendication 1 ou la revendication 2, dans lequel un logement (1) comporte au moins deux parties (2) de section semi-circulaire ou partiellement circulaire.

4. Limiteur de courbure selon l'une quelconque des revendications précédentes, dans lequel les logements (1) comportent chacun au moins deux parties (2) et toutes les parties des logements sont les mêmes.

5. Limiteur de courbure selon l'une quelconque des revendications précédentes, dans lequel la douille est définie par des nervures radialement en saillie vers l'intérieur (126) formant un lieu géométrique partiellement sphérique.

6. Limiteur de courbure selon l'une quelconque des revendications précédentes, dans lequel la tête (14) est définie par des nervures radialement en saillie vers l'extérieur (32) formant un lieu géométrique partiellement sphérique.

7. Limiteur de courbure selon l'une quelconque des revendications précédentes, dans lequel la tête (14) et la douille (116) sont toutes les deux munies de nervures en saillie (32,126).

8. Limiteur de courbure selon l'une quelconque des revendications précédentes, dans lequel une lèvre circonférentielle (32', 126') sur l'une quelconque de la tête (14) et de la douille (116) est en mesure de venir prendre appui contre un épaulement circonférentiel (22,122) sur l'autre quelconque de la tête (114) et de la douille (116) pour limiter toute déviation angulaire relative des logements accouplés (1).

9. Partie de logement (2) pour un limiteur de courbure, la partie de logement (2) étant semi-circulaire en section transversale et étant façonnée pour lui permettre d'être assemblée avec une partie de logement latéralement adjacente formée de manière similaire (2) pour former un logement (1) de section transversale circulaire ayant une tête mâle (14, 114), une douille femelle (16, 116) et une gorge traversante (35), de telle manière qu'une pluralité de tels logements (1) peuvent être accouplés ensemble pour former un limiteur de courbure, des logements longitudinalement adjacents (1) étant accouplés par un joint universel formé par la réception de la tête (14,114) de l'un dans la douille (16, 116) d'un autre d'une manière qui permet un déplacement angulaire relatif limité, et les gorges (35) des logements adjacents (1) communiquant pour former une gorge continue (35) permettant de recevoir un organe allongé, **caractérisée en ce que** la partie de logement (2) comporte des nervures en saillie (32,126) qui définissent dans le logement assemblé au moins l'une quelconque de la tête mâle (14, 114) et de la douille femelle (16,116) et **en ce que** la structure permet la circulation du fluide environnant à l'intérieur du limiteur de courbure.

10. Partie de logement selon la revendication 9, dans laquelle la douille (116) est définie par des nervures radialement en saillie vers l'intérieur (126) formant un lieu géométrique partiellement sphérique.

11. Partie de logement (2) selon la revendication 9 ou la revendication 10, dans laquelle la tête (14) est définie par des nervures radialement en saillie vers l'extérieur (32) formant un lieu géométrique partiellement sphérique.

12. Partie de logement (2) selon l'une quelconque des revendications 9 à 11, comportant une lèvre circonférentielle (32', 126') sur l'une quelconque de la tête (14) et de la douille (116) pour venir prendre appui contre un épaulement circonférentiel (22, 122) sur l'autre quelconque de la tête et de la douille pour limiter toute déviation angulaire relative des logements accouplés.
